# EUROPEAN PATENT APPLICATION

(11) **EP 1 033 873 A2**
(43) Date of publication of application: **06.09.2000**
(21) Application number: 00301236.6
(22) Date of filing: 17.02.2000
(51) Int. Cl.: H04N 5/84

(54) **Film writer**

(30) Priority: 03.03.1999 GB 9904891
(71) Applicant: Cintel International Limited, Ware, Herts SG12 0AE (GB)
(72) Inventor: Swinson, Peter R., St. Albans, Hertfordshire AL1 5LG (GB)
(74) Representative: Loveless, Ian Mark

(57) **Abstract**

A film writer includes a filter arrangement (51-53) such that in a single scan of a CRT (30) film (60) is illuminated with light of two or more colours. This is achieved by arranging two or more filters to be scanned in a single scan. The film writer can be a continuous motion and is arranged so that in a continuous motion patches of film (61-63) are successively illuminated by each of red, green and blue light with all three colours illuminating film (60) in a single scan at different locations on film (60).

## Description

This invention relates to the writing of electronic data to film and in particular to writing at rates commensurate with those obtained in traditional movie film shooting.

Before the advent of electronic video recorders there were two prime means of recording television programmes. Firstly, the programme could all be shot on film, and the final film edited version converted to a video signal using a film to video converter called a telecine. Secondly, the programme could be produced using electronic cameras and the live transmission recorded by viewing a video monitor with a synchronised film camera running at the same frame rate. This process worked adequately for monochrome television but proved less satisfactory for colour television due to the visibility of the dot matrix of the cathode ray tube (CRT) colour display, the long persistence of the phosphors, and disparities between the display phosphor colours and the film dye colours. Additionally such devices relied upon extremely fast camera pull-down mechanisms to match the short vertical interval of television systems. Normal camera pull downs are typically 50% duty cycle.

With the early CRT based film recorders, even in a black enclosure, the contrast range of the display CRT's was limited to around 50 to 1 due to the flare and halation of the CRT whereas, film had a contrast ratio measured as thousands to one. Therefore the full dynamic range of a CRT based film recording system could not be achieved. Poor dynamic range manifested itself in the film recording lacking detail in the dark areas of the image due to the prevalent veiling flare introduced by the long persistence of the phosphor, also subtlety of detail in light areas of the image was lost.

Improvement in recording colour television to film was made with the advent of the Triniscope film recorder, which employed three separate monochrome cathode ray tube displays, each being driven by one of the video primary components e.g. red, green and blue, in conjunction with imaging optics to couple a registered, focussed image to a synchronised film camera.

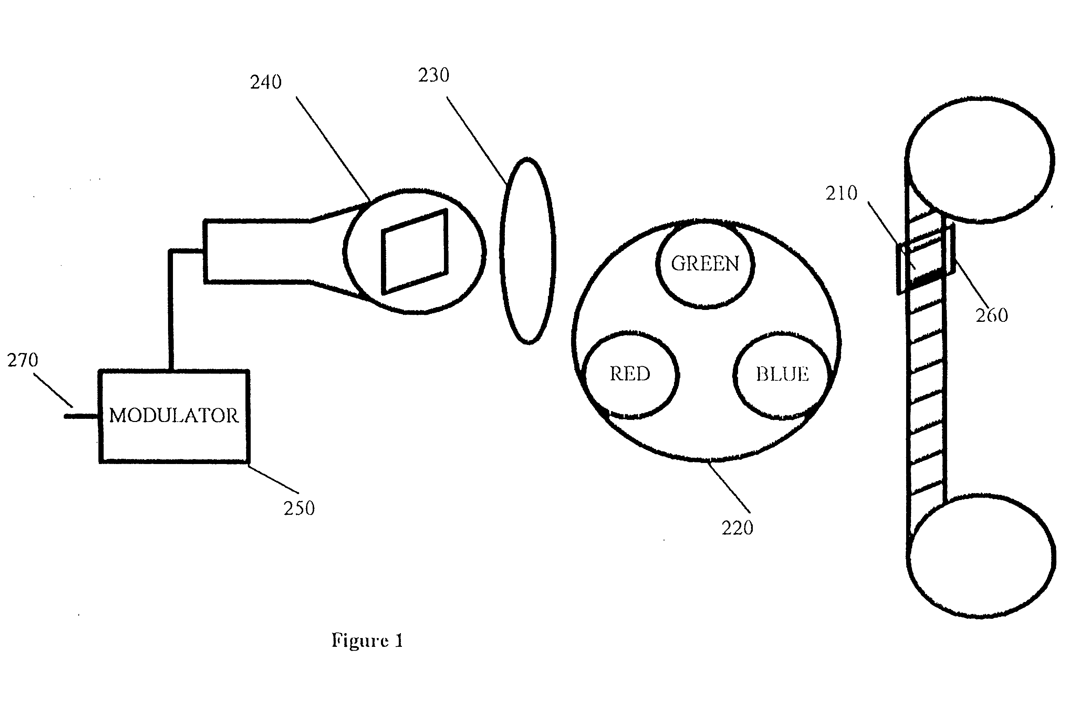

The invention of the video tape recorder largely made obsolete the need for "video film recorders" to record television. However, the principles of this type of film recorder continued to be developed for applications of recording computer image data to film. Current examples of such recorders are manufactured by Management Graphics Inc. with their Cine V product, and Celco Inc. with their "eXtreme" range of digital motion picture film recorders. These products function using the principle shown in Figure 1., whereby sequentially the red, green and blue image data 270 from each image frame is displayed on a progressively rastered CRT 240; the image data modulated raster image being imaged through a colour filter wheel 220 and recorded as red green and blue images on a single frame of film 210 held in a synchronised film gate 260. A modulator means 250 is used to modulate the beam intensity of the CRT 240, and the modulated beam imaged through the colour filter wheel 220, via imaging optics 230. Each of the manufacturers' products has its own speciality features to distinguish it from others in the market.

To try and overcome the flare, halation and resolution constraints of the CRT beam with these modern CRT based film recorders; two technical steps are taken. Firstly a thick faceplate CRT is used to greatly reduce flare and halation effects. The benefits of a thick face plate are set out in United Kingdom patent GB 2,199,443 "Reducing Flare in Cathode Ray Tubes". Secondly, the beam brightness is kept down so as not to impair the CRT resolution issue, this mandates a slower writing speed, for a given film sensitivity.

Using both these techniques has enabled CRT film recorders to achieve a dynamic range of 10 to 12 bits, i.e. around 2000:1. Film has a capture dynamic range of typically 10,000:1 i.e. 13 to 14 bits per colour. The slower writing speed means that the recordings are not done at normal film recording rates of 24 - 30 frames per second, but at typically 20 - 30 seconds per frame. At these transfer rates the writing of a 30 second film clip, for replay at 24 frames a second, takes 4 to 6 hours, dependent upon the resolution of the image, the speed of the film recorder and the sensitivity of the film stock used.

The typical application for writing digital imagery to film is in the case of Digital Film. Digital Film is the process of converting film imagery to a digital electronic form for manipulation in computers using specialist software, before being written back to film. The Digital Film process is used widely in movie film production for hidden wire removal, rotoscoping, special effects creation, and image damage repair.

The three stages of Digital Film are exemplified by a film scanner such as described in United Kingdom patent GB 2,286,309 "Clapper Gate Telecine Apparatus"; an image process such as made by Discreet Logic of Montreal, Canada with their "Inferno", "Flame" and "Flint" effects products; and a film recording such as possible with the "eXtreme fx MPR" film recorder manufactured by Celco, New Jersey, USA. Total Digital Film integrated system solutions are also available from Kodak, Rochester, USA with their "Cineon" product line, or Quantel, Newbury, UK with their "Domino" products.- The recorded film is usually colour intermediate film such as Kodak 5244, which may be developed and copied using film industry standard processing techniques.

With any Digital Film process there is usually more film recorded than actually used in the final film master - a shoot to use ratio. There may be anywhere between 3 to 20 times the number of elements recorded back to film, as finally used in the film master. The time taken to record to film is therefore of great importance. Image quality - resolution, colour depth, colour registration, colour saturation and purity are of course of equal importance. As discussed above CRT film recording is typically 500 to 1000 times slower than the normal movie camera-shooting rate of 24 frames per second - so called real time rate. Real time means at substantially the same frame rate as the film exposure rate.

There exist alternative means of recording on film as part of the Digital Film process. Sony of Japan have developed an Electron Beam Film Recorder which uses special film on which is recorded sequentially whole frames of red, green and blue image data. After developing this special film image red, green, blue triplets are optically combined into colour frames on standard intermediate film stock, which may then be copied using conventional film industry processes. The Sony electron beam recorder operates at slower than real time rates.

Laser film recorders exist. These are typified by the Arri, Munich, Germany "Arrilaser" film recorder. This records Digital Film images to Kodak 5244 colour intermediate film stock taking between 3 and 5 seconds per film frame dependent upon the resolution.

The resolution, colour depth, colour registration, colour saturation and purity quality of the Electron Beam and Laser film recorders are as high as those of the CRT based film recorders. Laser film recorders produce images with less optical flare than is the case for CRT film recorders.

Film recorders using CRT based scanning and Laser scanning are in daily use.

Typical CRT based devices use wide-band phosphors and sequential scanning of the separate colour components. Each film frame to be exposed is held static in a film gate while each colour component is scanned sequentially to the film through an appropriate filter placed sequentially between the film and the scanning CRT, as shown in Figure 1. The film is then advanced to the next frame. As a result of the scan, the need for the filter to change and the intermittent film transport, real-time scanning is impractical.

Typical Laser film recorders converge three (red, green, blue) laser beams onto a continuously moving film plane. The laser beam is scanned laterally by a deflection means onto the film, and the film scanning in the longitudinal dimension is created by the continuous motion of the film past the laterally scanning beam. The laser beam amplitudes are modulated by the data to be recorded in each colour. These film recorders offer high speed recording but real-time recording has not yet been achieved.

We have appreciated the need for an improved film writer, in particular for a film writer capable of writing at high speed without loss of quality. In a broad aspect, the invention tackles the problem of providing apparatus and method for writing colour data to film at higher speeds in particular in real time using a raster scanning means.

We have appreciated that the scanning process in a raster scanning film writer can be speeded up by reducing the time consuming parts of the process.

Accordingly, there is provided a film writer for converting electrical signals to a film image, comprising a raster scanner for converting electrical signals into modulated light, an imaging system arranged to image light from the raster scanner, onto film, a film transport for moving film past the raster scanner and a filter arrangement comprising two or more colour filters each of a different colour and each arranged to filter light from the raster scanner, wherein the film writer is so configured that in a single scan of the raster scanner, film held by the film transport is illuminated with modulated light of each of the two or more different colours.

The use of a single scan to illuminate film through two or more colour filters has the advantage of increasing the rate at which film frames may be scanned. The use of a filter wheel is not required, thereby eliminating the wasted time during which the wheel is mechanically rotated as in the prior art. The time wasted during flyback of a CRT beam or other raster scanner is also reduced because the beam only has to fly back once for every two or more colour frames written, rather than every colour frame as in the prior art.

The scan patches could be separated. In a preferred embodiment, however, the scan patches are contiguous. The scan patches could also be separated by a few scan lines, for example by four scan lines.

The single scan comprising contiguous scan patches in an embodiment of the invention provides illumination of film with two or more colours. The illumination could be of a single film frame with a single scan. However, in the embodiment the raster scanner and imaging system are so arranged that the film is illuminated in each scan by the two or more colours at two or more respective separate locations on the film corresponding to two or more separate film frames.

This arrangement is chosen because of the optical. simplicity of mapping a scan patch on a raster scanner such as the CRT face to a location on film.

Preferably, each patch of the raster scanner face is illuminated by light modulated in accordance with a signal related to adjacent frames of an image sequence, and the film transport is so arranged to transport the film such that in consecutive scans of the raster scanner a given portion of the film is illuminated by modulated light of a different colour.

This arrangement allows two or more frames of different colour to be written during each raster scanner scan, and then to transport the film such that two or more further frames are written. In an embodiment this allows each portion of film to be successively written with a different colour. Preferably there are three filters; red, green and blue so that three frames, one of each colour, are written during each scan.

In particular, the film transport and raster scanner are arranged to scan each portion of film with light modulated in accordance with a given image and of a first colour in a first scan, and to scan each portion of film with light modulated in accordance with light modulated in accordance with the given image and of a second colour in a second scan.

In the embodiment the film transport is a gate mechanism. The gate mechanism holds the film fast while the scan is performed, and then moves the film 1 frame between scans. The gate mechanism accordingly has an aperture sufficient for 3 frames to be scanned with a single scan of the raster scanner face, in particular 3 35 mm frames.

In a variation of the embodiment, the transport mechanism is a continuous motion film transport. In this variation, benefit is made of the motion of the film through the transport such that the aperture of the transport is sufficient to allow 2 frames of 35 mm film to be exposed at any instant. This is sufficient because the movement of the film is arranged so that 3 frames of film move through the aperture during one scan of the raster scanner. This approach is adopted to reduce the size of the aperture, and thereby reduce any fogging of the film due to persistence of the raster scanning light.

In the preferred embodiment, the raster scanner is a CRT.

A further advantage of continuous motion film transport embodiment is that the reduction in vertical scan height on a circular CRT face, allows a greater scan width to be used i.e. greater phosphor utilisation. This does require an appropriate adjustment of the imaging optics magnification.

In the embodiment where the film is moving during the scan sequence, short persistence of the phosphor is important. Any residual persistence will introduce smear in the film image in the direction of the film travel.

There is also provided a method for converting electrical signals to a film image using a film writer, comprising: scanning a raster scanner once to produce modulated light in accordance with electrical signals; filtering light from the raster scanner using a filter arrangement comprising two or more colour filters each of a different colour to produce modulated light of two or more colours from a single scan; and imaging the modulated light of two or more colours onto film.

The writing of two or more different colour frames simultaneously provides an increase in speed of writing. Preferably, the step of imaging comprises imaging the light of each different colour onto a separate portion of the film.

In the chosen method, the step of scanning comprises scanning the raster scanner in accordance with electrical signals of consecutive frames of an image sequence, whereby a first colour of one frame is imaged on a first portion of film and a second colour of a second consecutive frame is imaged onto a second portion of film. The method is particularly suited to cinematographic film in which a sequence of images generated by computer, or otherwise are written to film at adjacent frame locations. The embodiment thus has red, green and blue filters and comprises scanning a raster scanner in accordance with electrical signals representing each of three consecutive images of an image sequence; and imaging the modulated light onto film at each of three portions whereby a first portion is illuminated with red light modulated in accordance with a first image, a second portion is illuminated with green light modulated in accordance with a second image and a third portion is illuminated with blue light modulated in accordance with a third image.

To build up complete three colour images, the method comprises advancing the film; and scanning the raster scanner a second time in accordance with electrical signals representing a second set of three consecutive images of the image sequence whereby the second portion is illuminated with red light modulated in accordance with the second image, the third portion is illuminated with green light modulated in accordance with the third image, and a fourth portion is illuminated with blue light modulated in accordance with a fourth image. This film advance and image writing sequence is repeated a third time to complete the writing of full frame colour images as shown in Table 1.

An embodiment of the invention will now be described with reference to the accompanying figures, in which:
- Figure 1:: is a schematic representation of a known film scanner;
- Figure 2:: is a schematic representation of a film writer embodying the invention; and
- Figures 3 to 7:: are schematic representations of film frames scanned with the writer embodying the invention.

An embodiment uses a raster scanner which converts electrical signals, such as representing an image, to a light source comprising a sequence of lines or 'raster' which together represent the image. A CRT is an example of a raster scanner which produces a broad spectrum, raster like light source by deflecting an electron beam to produce a flying spot on a phosphor CRT face. This is one type of raster scanner within the scope of the invention.

There are other types of raster scanner, such as systems which use a collimated light source deflected by mirrors, prisms or other optics in two dimensions. A Texas Instruments Digital Micromirror Device (DMD) could also be configured to produce a raster scan. Each mirror of an array in the DMD device can be individually turned to reflect, or dump, light and operated to produce a raster scan.

In an embodiment of the invention, the raster scanner uses broad spectrum light. Preferably, the raster scanner is a flying spot scanner, in particular a CRT.

The embodiment is thus based upon known flying spot technology for scanning of film. Such technology is used in telecine products manufactured by Cintel International Limited, and is exemplified by their URSA series and C-Reality telecine product ranges. The latter of these wide band red, green, blue film scanning products is capable of operating in real time at High definition Television (HDTV) rates, in real time at Standard Definition Television (SDTV) rates, and at quarter real time rate for Data Scanning (2K) applications.

In this context HDTV means a progressive scan of the film with a CRT raster patch comprising at least the equivalent of 1920 pixel horizontal resolution off the widest dimension of the film frame image, and at least the equivalent of 1080 lines off the smaller dimension of the film frame image - SMPTE Standard 274M is a reference by example only. Similarly SDTV implies a progressive scan of the film image with a CRT raster patch comprising at least 720 active picture pixel horizontal resolution off the widest dimension of the film frame image, and at least 576 active picture lines off the smaller dimension of the film frame image - CCIR REC 601/656 standard is a reference by example only. Whereas, 2K data with 35 mm film implies a progressive scan patch which realises with full aperture 35 mm film at least 2048 active picture pixels resolution off the widest dimension of the image, and at least 1556 active picture lines off the smaller dimension of the film image. A description of the principles of flying spot telecines may be found in chapter 39 of "TV & Video Engineer Reference Book", ISBN 0 7506 1953 8, published by Butterworth- Heinemann Limited.

For the purposes of the description reference will be made to 35 mm film which according to SMPTE Standard 59-1991 has film frame maximum image areas 24.92 mm wide by 18.67 mm high. Whilst this particular film type is used for the description this is merely for the purposes of illustration and any other film type and dimensions could be used and the principles set forth scaled to apply as necessary.

The CRT used with a flying spot telecine is characterised in having a high efficiency phosphor with a broad spectral response, which encompasses the spectra of dyes used with film, and being a single crystal phosphor.

Further characterisation factors are having a very short phosphor afterglow response, typically less than 120 ns for its phosphor 90 to 10 % illumination performance; having a very fine granularity phosphor screen; having electron optics which permit spot sizes down to 45 nm to be produced; being fitted with a thick face plate to eliminate halation and flare effects; and capable of being operated at at least 30KV for high luminance output. Such a CRT would be the Brimar Limited HD2121-3, which uses a YAG derivative phosphor.

Telecine CRT's are designed to operate with a continuous screen loading i.e. the beam current being constant. In contrast, in a film writing application the CRT beam current is modulated in sympathy with the data to be recorded on the film.

Typically telecine CRT's use magnetic beam alignment, magnetic deflection and magnetic focusing. Scanning systems capable of operating at the frequencies set out above for HDTV, SDTV and 2K, are manufactured by Brimar Limited and are typified by their linear scan amplifier model DM120-2, and their focus and alignment amplifiers DM123, 124, 125, and 126.

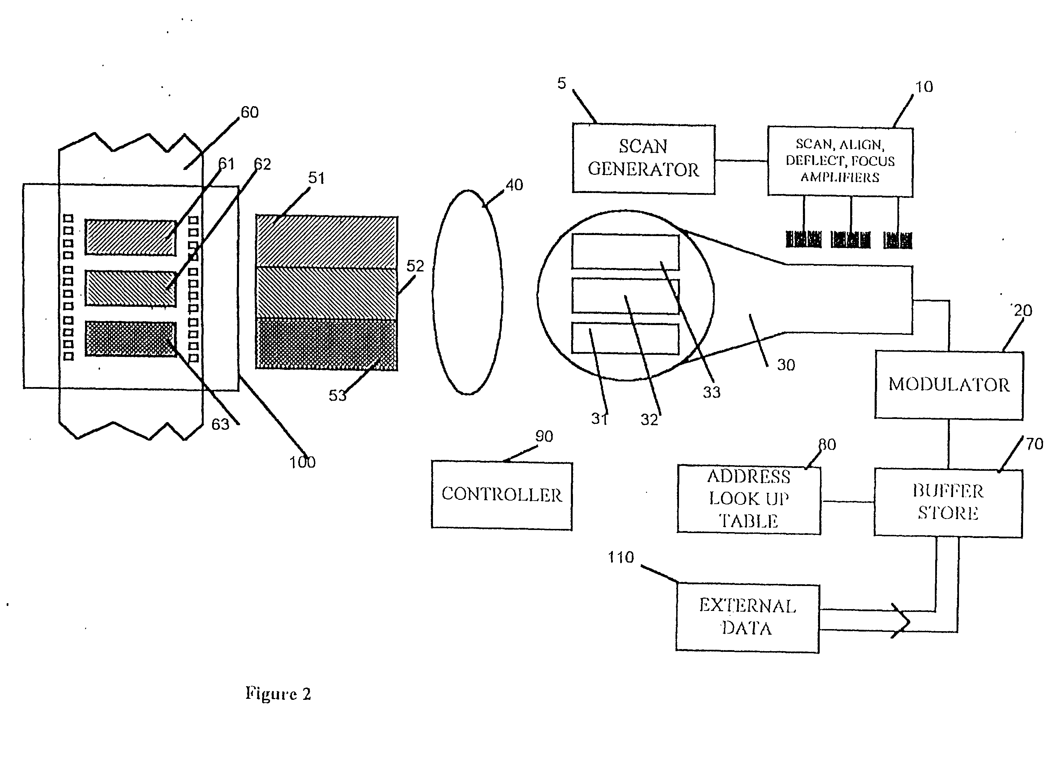

Figure 2 shows a schematic representation of an embodiment of the film writer. A cathode ray tube scanner is provided by amplifiers 10 drive the magnetic scan, alignment and focus coils of a typical telecine CRT 30. The CRT 30 has a progressive raster scan made up of patches 31,32,33 being a contiguous scan where patches 31,32,33 have equal line counts and horizontal resolution, and are shown diagrammatically separated merely for clarity although, the flexibility of a flying spot scanning means such as used with a telecine would not preclude actually having a physical separation between the scan patches during one contiguous scan, or even the scan being blanked during certain parts of the scan. The amplitude of the CRT beam is modulated with modulator 20 fed from a buffer store 70 which holds the red, green, blue data associated with images to be written to the film. The data read out from the buffer store is read out sequentially as whole frames of red then whole frame of green then whole frame of blue data. The addressing means for selecting the red, green, and blue data may be in a preferred embodiment controlled by a look up table (LUT) 80 for reasons which will become clear with further explanation of the system. The Buffer Store 70 is fed with data from external data serving means 110. A controller 90 is provided to synchronise the operation of the scan generator 5, LUT 80 and buffer store loading from the external data server 110.

The contiguous raster patches 31,32,33 are imaged via an imaging system such as a lens shown as optics 40. The imaging optics have the characteristics of very high transmission, and a common accurate real image plane, at all optical frequencies of interest. These optics also have a high modulation transfer characteristic. The magnification of the imaging optics is such that the raster scan patches 31,32,33 are imaged onto three optical filters 51,52,53 being nominally red 51, green 52 and blue 53 where the selected filters' colorimetry match the dye characteristics of the film 60. The size of the resulting red green and blue images are such that they exactly image into the required area of a whole image film frame - in our example case with 35 mm film this is a patch 24.92 mm wide by 18.67 mm high. Thus three images are formed on three consecutive frames 61,62,63 of the film 60, being, in this example, held static in a film transport shown as film gate 100 which has a sufficiently large aperture that three whole frames can be exposed.

The whole frame sequential red, green, blue data from the Buffer store 70 is used to modulate the continuous scan comprising the contiguous patches 31, 32, 33 such that the red image is on scan a first patch 31, green on a second patch 32 and blue on a third patch 33. This results in first, second and third consecutive film frames 61, 62, 63 having respectively the red, green and blue images imaged upon them.

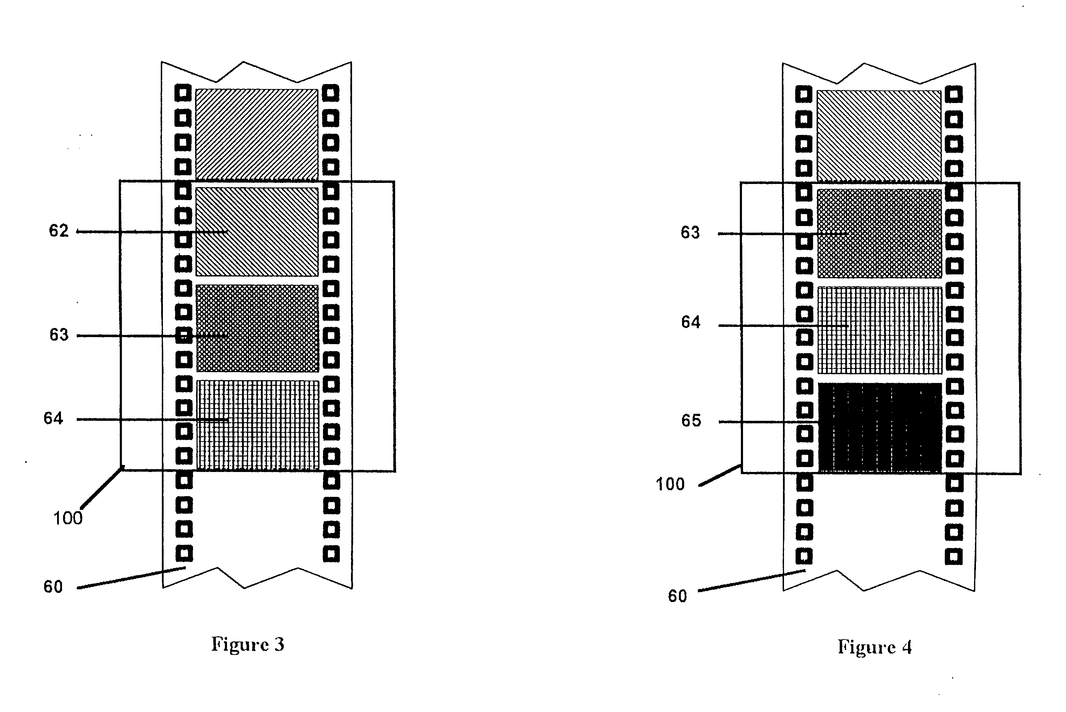

Having exposed the red, green and blue images the film frame is then advanced one whole frame, with the CRT illumination blanked, to leave two of the previously scanned film frames 62, 63 and new frame 64 in the gate as shown in Figure 3, and the red, green and blue exposure repeated. The second film frame 62 will now have on it a green and red image, the third film frame 63 will have on it a blue and green image, and the fourth (new) frame 64 just a blue image. The film is further advanced a further whole film frame, whilst the CRT illumination is blanked, to have the third and fourth film frames 63, 64 and new fifth frame 65 in the gate as shown in Figure 4, and the exposure -process repeated. The images on the film will then be as follows:
third film frame 63 blue, green, red
fourth film frame 64 blue, green
fifth film frame 65 blue.

Each subsequent repeat of this frame advance and exposure process will result in completion of a film frame with a red, green and blue image upon it. Clearly the first two frames 61, 62 never actually get a complete colour image upon them.

By suitable changing of the red, green blue data out of the Buffer Store 70, it is possible to write to the film consecutive frames of colour data - this is portrayed in Table 1 as Write m (Wm), where m is the numerical number of the exposure, image data represented by Red n (Rn), Green n (Gn) and Blue n (Bn) where n is the numerical number of the image data, and Film Frame p (Fp) where p is the numerical number of the completed exposure film frame.

**TABLE 1**

| Write W1 | Write W2 | Write W3 | Write W4 | Write W5 | Write W6 | etc | Completed Film Frame |
|---|---|---|---|---|---|---|---|
| R1 | | | | | | | partial |
| G1 | R1 | | | | | | partial |
| B1 | G1 | R1 | | | | | F1 |
| | B2 | G2 | R2 | | | | F2 |
| | | B3 | G3 | R3 | | | F3 |
| | | | B4 | G4 | R4 | | F4 |
| | | | | B5 | G5 | etc | F5 |
| | | | | | B6 | etc | F6 |
| | | | | | | etc | etc. |

To cope with the partial completed frames which form the first two frames written (frames 61 and 62 of Figures 2. and 3.) the Buffer Store 70 might hold five whole frames of data being R1, G1, B1, G2, B3 to enable the LUT 80 to output the requisite data according to the table above. Alternative arrangements would be where the Buffer Store 70 holds three whole frames of data and is loaded with the correct data for the write sequence. If the connectivity between the modulator 20 and the external data means 110 can be made fast enough there may not be a need to buffer a whole frame of data and a minimal buffer organised. However the relatively low cost of fast access data storage allows buffer storage without undue cost penalty. After write sequence two (W2) the steady state condition applies in which the data in the Buffer Store 70, or from the external data storage 110, must include Rn, Gn+1, Bn+2, where n is the numerical number of the image data.

In the implementation described above, the film motion is intermittent i.e. whole film frame advance with the CRT illumination blanked. It is also possible to implement the embodiment of the invention in which the film is in a state of continuous motion, as will now be described. This implementation of the embodiment has the same components as previously described with reference to Figure 2, but operates in a different manner.

It has been the practice for a long time to operate flying spot telecines in a continuos motion manner. A continuous motion flying spot telecine has the film continuously moving. This is much gentler on film handling as there are no forces applied to the sprocket holes thereby minimising the risk of damage - it is the sprocket holes which constitute the absolute reference for image spatial positioning. The film is driven by a capstan, and the flying spot raster is dynamically adjusted to chase the required film frame in the required direction, as it moves through the film gate. This results in either the raster patch on the CRT becoming larger or smaller than normal in still scan mode, depending upon whether it chases the image in the direction of film motion, or against the direction of film motion respectively. Ultimately, if the speed of the film is increased the scan patch size becomes either too large for the CRT screen, or it reduces to a single line. Either case introduces complications well known to those skilled in the art of flying spot telecine design and operation.

In the present implementation of the invention, the same considerations arise. Consider the case whereby the film is in continuous motion at the real time rate of 24 frames per second, the CRT raster scan has a refresh rate of 24 frames per second, and the scan patch reduces in size to compensate for the motion. To function in the manner previously described the film gate aperture has to be large enough that with the motion of the film three whole frames of film are exposed during the one contiguous scan of the CRT.

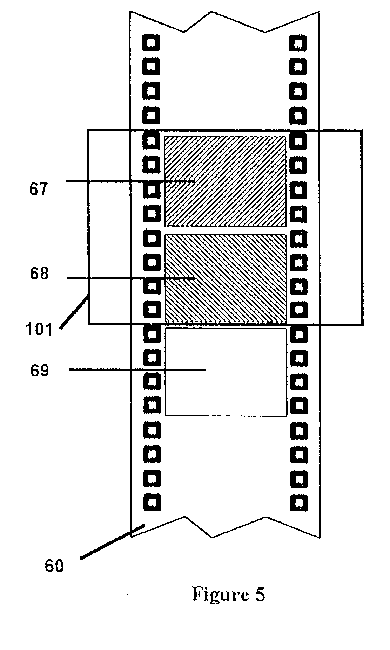

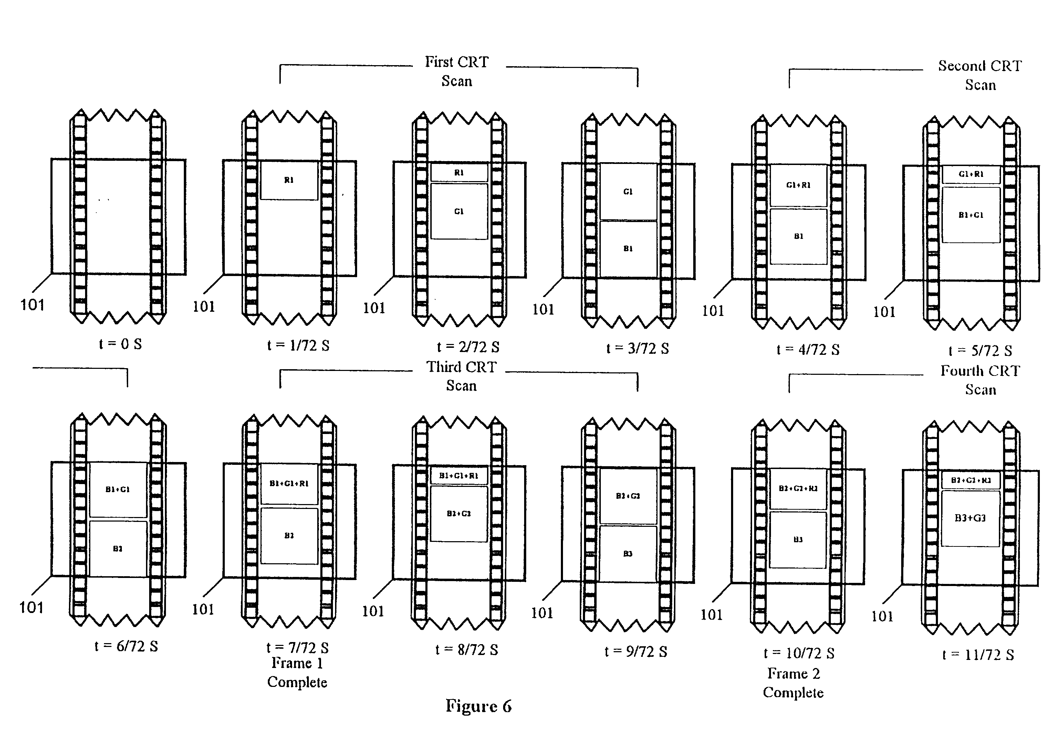

In the case of the intermittent motion implementation, the gate had to be large enough for three whole frames of film to be exposed with the film stationary but this is not the case with the continuous motion since the film motion can be used to advantage to minimise film exposure. In Figure 5 the film gate 101 is shown and is similar to film gate 100 shown in Figure 2, except that gate 101 is now just 2 (two) film frames in height. With the film motion, by the time the red frame 67 has been written, for example, it will have moved one third out of the gate 101, and the blue frame 69 will be one third into the frame. By the time that the green frame has been written the red frame will be two thirds out of the gate, and the blue frame two thirds into the gate. Completion of writing the blue frame will coincide with the red frame exiting the gate. Figure 6. portrays the sequence of film frames in the gate every third of a frame scan assuming the real time scan/film rate of 24 frames a second is used. This shows that with a film gate 101 whose height is 2 (two) film image heights in size, a full colour film frame can be composed over three frame intervals as shown in Table 1.

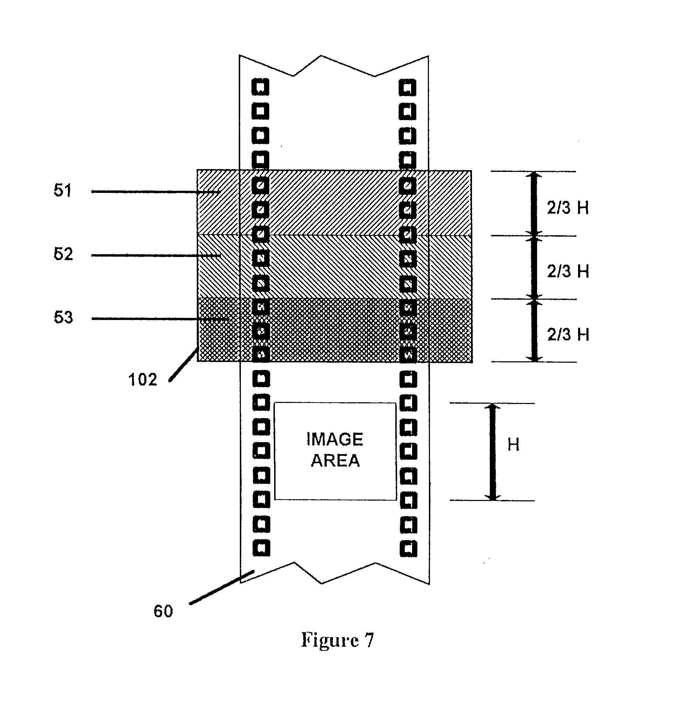

Figure 6. shows that writing takes place over an area equivalent to two whole frames of the film image. Figure 7. shows an alternative film gate 102 in which there are fixed red, green, blue filters applied to the gate in which the gate aperture dimensions are such that it covers two whole film frame image areas of the film. In this variation the film gate aperture has reduced to 2x the film write height.

The significance of having the film gate aperture of as small a height as possible lies in the fact that whilst the CRT has a very short afterglow it will still emit some very low level illumination dependent upon the total energy which has been put into any specific area of the screen. The longer the film is exposed to this light the more smearing will take place. It is therefore important to minimise the exposure the film gets to the CRT to maximise the contrast range achieved on the film. Those skilled in the art will appreciate the fact that a CRT can be used within a flying spot telecine, without long term CRT persistence being a problem (because the telecine CRT beam is at a constant high energy level), means that the same CRT will work in a film writing mode where the beam energy level is dynamically varied by the image data during the scan.

The film sensitivity will be sufficient with modern commercially used film stocks to get adequate exposure provided that the optics between the CRT and the film are fast i.e. low relative aperture number.

Figure 2. shows the colour filters 51,52,53 being mounted adjacent to, or even as part of, the film gate. These filters may equally well be located on the CRT tube face to correspond with the location of the CRT patch in normal run mode.

With both flying spot and CCD line array telecines, it is advantageous to use a film gate skid plate which is curved in the long dimension of the film since it is known that this removes the natural tendency of film to curl across its width. By doing this the film lies flatter across the width of the film gate aperture and better focus uniformity is achieved. In either of the present implementations, a curved skid plate may be used provided that the imaging optics (40) of Figure 2. are designed for a curved focal plane. The necessary large size of the film gate aperture, and its associated large writing area, suggests the use of a curved skid plate in the gate or a solid back plate pressure pad as used in conventional motion picture cameras would be advantageous.

The image stability of the written film will be dependent upon the stability of the scans and the stability of the film as it goes through the film gate. Use of the contiguous scan as described will help ensure that a stable scan is produced. The experience with high-resolution real time telecine scanning confirms that scan stability with such a scan is good. The mechanical stability of the film as it goes through the gate can also be ensured by making use of techniques used in the telecine industry, whereby various combinations of multiple edge guidance pressure means are applied to maintain stability of the film as it passes through the film gate. Use can also be made of highly polished surfaces in the film gate path so that the film smoothly glides over them. Film has one edge accurately cut so that it may be used for edge guidance - often a ceramic or jewelled guide surface in the gate will be used for such a purpose.

The fact that the film is moving as well as the scan would result in there being a slight skew on the line written to the film. Accordingly, this fact is taken into account in the design and alignment of the colour filters and raster shape of the second implementation of the embodiment described.

It is known from experience with telecines that current CRT technology will permit the real time scanning of film with a raster which constitutes an image at least 1920 pixels by 1080 lines. Clearly this could equally be a raster which constitutes an image of 1920 lines by 1080 pixels. Conveniently 640 lines scan allocated to each of the three sequential scan patches 31,32,33 (640 x 3 = 1920). To permit an image separation between the scan patches 31,32,33 additional lines need adding to the patch say four per patch. This is also to allow time for the vertical fly back.

If, in our example, the whole of the available image area of 35 mm film is to be written, then a patch 24.92 by 18.67 needs to be written. This is an area with an aspect ratio of approximately 1.335. Thus in the implementation using 640 active picture lines a scan patch of (640 + 4) x 1.335 = 860 active picture pixels is required. Since 860 pixels is less than 1080 pixels the scan can be generated with known CRT technology.

It is established that available CRT scanning technology can generate a very high quality 1920 x 1080 = 2,073,600 equivalent pixel scan - the example 3x(640 + 4) x 860 = 1,661,520 equivalent pixel scan is approximately 20% lower.

The chosen example is therefore to produce a contiguous scan consisting of three patches each of size 644 lines by the equivalent of 860 pixels.

It is worth noting that the international standard for digital standard definition television, as set out in standard ITU 601/656 (CCIR REC 601, CCIR REC 656) [also known as the 4:2:2 and 4:4:4 format], is in 625/50 720 active picture pixels by 576 active picture lines, and in 525/60 720 active picture pixels by 484 active picture lines. Thus in the implementation of three scans 644 lines by 860 equivalent pixels would be capable of recording a standard definition 4:4:4 red, green, blue television signal in real time, provided that for 625/50 systems the scan rate can be increased to 25 frames per second, and for 525/60 systems the scan rate can be increased to 30 frames per second. Those skilled in the art will know that the bandwidth of the system described (1920 x 1080 x 30, the SMPTE 264M standard) encompasses both the 625/50 and 525/60 case, and therefore real time recording of SD signals on to film is possible.

Consider the dimensions of the present embodiment.

The active lines are 640, writing across 18.67 mm - this implies a write line width of 18.67/640 = 0.02917 mm i.e.29.17 µm. [The horizontal calculation is 24.92/860 = 0.02898 mm. This confirms that the scan write resolution will produce square pixels.] This identifies that nominally a 30 µm spot size is required to write to the film. It is known that the a CRT such at the Brimar Limited HD2121-3 can produce a spot size of down to 45 µm. Therefore the magnification of the imaging optics is made minus 2 (i.e. in the forward path the CRT illumination area is minified), the CRT will only have to be tuned to produce a spot diameter of nominal 60 µm to achieve the requisite write resolution on the film. A magnification of 2 is not demanding for a lens of the required performance.

With the example of a system of writing to 35 mm film it is possible to consider a systems in which instead of a round spot a lozenge shape spot can be used either to increase, or reduce, the spatial resolution in either the horizontal or vertical dimension. This technique can also be used to fill in between the lines, if there is a risk of a line structure being visible on the film. The flexibility of the CRT and scanning system is such that the shape of the spot and its position can be dynamically changed during the contiguous scan to compensate for any aberrations in the optics, or to dynamically vary the resolution of the written image. Dynamic variation of the CRT spot can also be used to maximise the light output from the CRT (phosphor illumination) for a given image writing need.

In the embodiment the chosen spot size on the film is a nominal 30 µm. Thus the four additional lines added to each scan to give separation between the image scans corresponds to a physical dimension of 30 x 4 = 120 µm which is sufficient for 35 mm film.

The embodiment system scans 1932 lines 24 times a second. The line time of the system is thus (1000/24)/1932 = 21.6 µs. Between each of the scans there was an allowance of 4 lines of separation. Thus the vertical fly back time is 4 x 21.6 = 86.4 µs. It is known that the Brimar Limited DM120-2 linear scan system is capable of fly back times as short as 3 µs, and therefore the proposed system is well within any technical limitations.

The principles expounded in the present embodiment may be applied to other specific applications to derive the operating characteristics. The principles may also be applied to systems which require writing a greater number of constituent data/image information parts to each film frame e.g. red, green, blue, infra red, by suitable increment of the contiguous scan elements.

Clearly the principles expounded may be applied to greater or lesser scan refresh rates than the 24 frames per second used in the example, e.g. 25 fps of 625/50 television or 29.97 of 525/60 television, so long as the bandwidth required falls within the notional pixel x line x scan rate envelope of the Cathode Ray Tube and Scanning system. These techniques may also find application with other real time rastered beam generators such as electron beam guns which write to specialist film.

## Claims

1. A film writer for converting electrical signals to a film image, comprising:
- a raster scanner for converting electrical signals into modulated light;
- an imaging system arranged to image light from the raster scanner onto film;
- a film transport for moving film past the raster scanner; and
- a filter arrangement comprising two or more colour filters each of a different colour and each arranged to filter light from the face of the raster scanner;
- wherein the film writer is so configured that in a single raster scan of the raster scanner, film held by the film transport is illuminated with modulated light of each of the two or more different colours.

2. A film writer according to claim 1, wherein each of the two or more colour filters is arranged to filter light from each of two or more respective scan patches on the face of the raster scanner, and each of the two or more scan patches is illuminated in a single raster scan of the raster scanner.

3. A film writer according to claim 2, wherein the patches are contiguous on the face of the raster scanner.

4. A film writer according to claim 2, wherein the scan patches are non-contiguous on the face of the raster scanner and are separated by one or more scan lines.

5. A film writer according to any preceding claim, wherein the raster scanner and imaging system are so arranged that the film is illuminated in each scan by the two or more colours at two or more respective separate locations on the film corresponding to two or more separate film frames.

6. A film writer according to any preceding claim, wherein the imaging system comprises one or more lenses.

7. A film writer according to claim 5 or 6, wherein each patch of the face of the raster scanner is illuminated by light modulated in accordance with a signal related to adjacent frames of an image sequence.

8. A film writer according to any preceding claim, wherein the film transport is so arranged to transport the film such that in consecutive scans of the face of the raster scanner a given portion of the film is illuminated by modulated light of a different colour.

9. A film writer according to claim 8, wherein the film transport and raster scanner are arranged to scan each portion of film with light modulated in accordance with a given image and of a first colour in a first scan, and to scan each portion of film with light modulated in accordance with light modulated in accordance with the given image and of a second colour in a second scan.

10. A film writer according to any preceding claim, wherein the film transport is a gate mechanism.

11. A film writer according to claim 10 wherein the gate mechanism has an aperture dimensioned to accommodate only three frames of 35 mm film in a single raster scan.

12. A film writer according to any of claims 1 to 8, wherein the film transport is a continuous motion film transport.

13. A film writer according to claim 8, wherein the aperture of the transport is sufficient to allow only 2 frames of 35 mm film to be exposed at any instant, and the transport is arranged to move the film such that three frames of film are scanned for each raster scan of the raster scanner.

14. A film writer according to any preceding claim, wherein the raster scanner and film transport are arranged to write film in real-time.

15. A film writer according to any preceding claim wherein the filter arrangement comprises a red filter, a green filter and a blue filter.

16. A film writer according to any preceding claim, wherein the raster scanner is a cathode ray tube.

17. A method for converting electrical signals to a film image using a film writer, comprising:
- scanning a raster scanner once to produce modulated light in accordance with electrical signals;
- filtering light from the raster scanner using a filter arrangement comprising two or more colour filters each of a different colour to produce modulated light of two or more colours from a single raster scan; and
- imaging the modulated light of two or more colours onto film.

18. A method according to claim 16, wherein the step of imaging comprises imaging the light of each different colour onto a separate portion of the film.

19. A method according to claim 17, wherein the step of scanning comprises scanning the raster scanner in accordance with electrical signals of consecutive frames of an image sequence, whereby a first colour of one frame is imaged on a first portion of film and a second colour of a second consecutive frame is imaged onto a second portion of film.

20. A method according to claim 18, further comprising:
- advancing the film; and
- scanning the raster scanner a second time whereby the second colour of the first frame is imaged on the first portion of film.

21. A method according to claim 19, further comprising advancing and scanning the film further times whereby further portions of film are successively illuminated by modulated light of two or more colours.

22. A method according to any of claims 16 to 20 wherein the filter arrangement comprises one each of a red, a green and a blue filter, comprising:
- scanning a raster scanner in accordance with electrical signals representing each of three consecutive images of an image sequence; and
- imaging the modulated light onto film at each of three portions whereby a first portion is illuminated with red light modulated in accordance with a first image, a second portion is illuminated with green light modulated in accordance with a second image and a third portion is illuminated with blue light modulated in accordance with a third image.

23. A method according to claim 21, further comprising:
- advancing the film; and
- scanning the raster scanner a second time in accordance with electrical signals representing a second set of three consecutive images of the image sequence, whereby the first portion is illuminated with green light modulated in accordance with the first image, the second portion is illuminated with blue light modulated in accordance with the second image, and a fourth portion is illuminated with red light modulated in accordance with fourth image.

24. A method according to claim 22, further comprising repeatedly scanning and advancing whereby each film portion is successively illuminated by red, green and blue light modulated in accordance with an image of an image sequence.

25. A method according to any of claims 17 to 24, wherein the raster scanner is a cathode ray tube.
